# EUROPEAN PATENT SPECIFICATION

(11) **EP 2 363 428 B1**
(45) Date of publication and mention of the grant of the patent: **05.03.2014**
(21) Application number: 11151850.2
(22) Date of filing: 24.01.2011
(51) Int. Cl.: C08K 3/00

(54) **Rheology modifier for cement slurries**
Rheologiemodifizierer für Zementschlämme
Modificateurs de rhéologie pour coulis de ciment

(30) Priority: 23.02.2010 US 307218 P
(43) Date of publication of application: 07.09.2011
(73) Proprietor: Dow Global Technologies LLC, Midland, MI 48674 (US)
(72) Inventor: Dominowski, Jolee M., Linwood, MI 48634 (US); Powell, Cindy L., Weidman, MI 48893 (US); Radler, Michael J., Midland, MI 48642 (US); Price, Michael C., Auburn, MI 48611 (US)
(74) Representative: Buckley, Guy Julian

(56) References cited:
- CN-A- 101 354 926
- CN-A- 101 440 249
- SU-A1- 675 169
- SU-A1- 684 129
- US-A1- 2005 092 209

## Description

### Field of the Invention

The invention relates to a polymer composition which is useful as a rheology modifier for cement slurries.

### Background of the Invention

Cement slurries have been used for a large variety of purposes for a long time. U.S. Patent No. 3,483,007 published as early as 1969 discloses aqueous hydraulic cement compositions, particularly in well-cementing operations. The hydraulic cement composition comprises a hydroxyalkyl cellulose ether as a fluid loss additive to lessen the fluid loss of the hydraulic cement composition to porous media. The usual increase of viscosity caused by the hydroxyalkyl cellulose ether is lessened by admixture therewith of not less than 10 weight percent of sodium chloride, by weight of water present. The cement slurry can comprise an anti-fogging agent, such as a polyoxyalkylene glycol having an average molecular weight from 2,000 to 6000, tributyl phosphate, and liquid silicones.

US-A-2005/092209 discloses an admixture composition for cement, said composition comprising emulsifiers, toughening resins and a plurality of accelerator compounds. Amongst the various possibilities suggested within this document, phenyltrimethyl siloxane may be used as an accelerator compound.

In the construction industry, a stable rigid base is required for paving, building and parking structures, which requires the stabilization of the substrate soil. This stabilization may be accomplished by combining cement with the soil. Combinations of cement and soil are referred to as, but not limited to, soil cement, cement treated base, cement stabilized soil, and cement treated soil. The creation of soil cement involves the addition of specified amounts of cement per cubic unit of soil. The cement treated soil is then graded and compacted. The cement treated soils are then allowed to cure whereby the cohesive material gains in strength and rigidity over time.

One method to create soil cement is to use an aqueous cement slurry. This method is preferred over the usage of dry cement since a large amount of dust is created by using fine cement powder. The cement slurry is placed over a substrate soil and then mixed in using mechanical means. However, slurry methods have proven to be very problematic in use. Cement slurry will harden in shipping vehicles if not removed in a timely manner. In addition, the cement itself will separate or fall out of solution almost immediately after mixing with water. Even in concentrations as low as 10% cement in water, the cement will begin to fall out of solution within a couple of minutes. The use of chemical retardation to prevent the premature setting of cement based materials, including cement slurry, is well known throughout the industry. One common retarding compound is sugar. Employing chemical retardation in cement slurry tends to diminish the problems of setting prior to application. However, it additionally tends to increase the rate at which the cement falls out of solution.

As an alternative to soil cement, a process called full depth reclamation can be used to provide a base for structures such as roads, parking lots, and other paved areas. This process involves grinding up and pulverizing the asphalt surface and blending it with the underlying base, sub base, and/or sub grade material. Cement and water are added to the combined materials to stabilize them much in the same way that cement can be added to substrate soil to create stabilized soil cement. The mixture is then compacted in place to form a stabilized substrate for the new paving. However, this process, because it involves the addition of cement to stabilize the base, runs into the same problems discussed above with respect to the application of cement for soil stabilization.

Accordingly, a long-felt need remains for a cement slurry that does not prematurely set or settle out during transport.

US 2009/0044726 addresses this needs and discloses a cement slurry comprising from 45 to 65 weight percent cement, from 55 - 35 weight percent water, a retarder to prevent the cement from setting for a predetermined period of time and a thixotropic thickener to maintain cement in suspension for a predetermined period of time. Useful retarders are sucrose, carboxylic acids and others. Useful thixotropic thickeners include methylhydroxyethyl cellulose. The cement slurry may comprise an anti-foaming agent. Disclosed antifoaming agents are Agitan P-823 (a blend of liquid hydrocarbons and polyglycols on an inorganic carrier); tributyl phosphate, or Dee Fo 97-3 (a metallic stearate on a mineral oil carrier). Unfortunately, these antifoaming agents do not cause sufficiently fast dissipation of built foam.

SU-A-684129 and SU-A675169 each disclose grouting mortar compositions comprising a water loss reducer such as methyl cellulose in combination with a furfuryl alcohol antifoaming agent. Also disclosed are grouting mortar compositions comprising polymethylsiloxane as the antifoaming agent.

Non-cement containing compositions including antifoaming agents are also known. For example, CN-A-101440 249 discloses a fireproof paint comprising an organosilicon antifoaming agent, a polyether polysiloxane flattening agent and a cellulose ether or derivative thereof as a thickening agent. Further, CN-A-101354926 discloses a conductor slurry comprising silver carbon and silver, wherein said composition comprises ethyl cellulose, phenolic resin, acrylics or ethylene glycol monoethyl ether acetate and an antifoaming agent selected from calcium carbonate, tricalcium phosphate and/or polysiloxanes.

When using cement slurries for building a stable rigid base for paving, building and parking structures, it is critical to minimize the air entrapped in the hardened cement. Entrapped air reduces the stability of the hardened cement. However, cement slurries often tend to foam due to the continuous agitation which is necessary to keep the solid components of the slurry in suspension and due to additives like cellulose ethers incorporated in the cement slurry. Accordingly, there is a strong need to provide a new cement slurry wherein formed foam dissipates fast.

### Summary of the Invention

The present invention, in its various aspects, is as set out in the accompanying claims.

One aspect of the present invention is a polymer composition comprising a) a polysaccharide derivative that is a cellulose ether, starch ether, carboxymethyl guar, hydroxypropyl guar, carboxymethyl hydroxypropyl guar or cationized guar, b) a siloxane and c) an anti-foaming agent different from a siloxane.

Another aspect of the present invention is a cement composition comprising cement, a polysaccharide derivative that is a cellulose ether, starch ether, carboxymethyl guar, hydroxypropyl guar, carboxymethyl hydroxypropyl guar or cationized guar, a siloxane and an anti-foaming agent different from a siloxane.

Yet another aspect of the present invention is a method of forming a cement stabilized substrate comprising the steps of adding to the substrate a cement slurry produced by mixing a polysaccharide derivative, a siloxane, an anti-foaming agent different from a siloxane with cement, water and one or more optional additives, mixing the cement slurry into the substrate, and grading and compacting the mixture of substrate and cement slurry.

Yet another aspect of the present invention is the use of the above-mentioned polymer composition of the invention for modifying the rheology of a cement slurry.

Yet another aspect of the present invention is the use of the above-mentioned cement composition of the invention for stabilizing a substrate.

### Detailed Description of the Invention

It has been found that potentially built foam in cement slurries dissipates quickly if a) a polysaccharide derivative, b) a siloxane and c) an anti-foaming agent different from a siloxane are added to cement before, during or after cement is slurried in water. Surprisingly, a synergistic effect has been found when using a siloxane and an anti-foaming agent different from a siloxane in combination. Foam dissipates more quickly when using a siloxane and an anti-foaming agent different from a siloxane in combination than when using them individually at corresponding amounts. Even more surprisingly, it has also been found that the incorporation of a siloxane and an anti-foaming agent different from a siloxane in general does not adversely affect the viscosity or the flow (slump) of the cement slurry. The usage of a) a polysaccharide derivative, b) a siloxane and c) an anti-foaming agent different from a siloxane in combination for modifying the rheology of a cement slurry allows the polysaccharide derivative to be added directly to the cement slurry production tank and provides a more stable slurry with increased stability during transportation.

Preferably a) the polysaccharide derivative, b) a siloxane and c) an anti-foaming agent different from a siloxane are added to the cement simultaneous with or, more preferably, before the addition of water to cement. The polysaccharide derivative, the siloxane, the anti-foaming agent different from a siloxane and optional additives as described hereafter can be added individually to the cement, but they can be conveniently added as a pre-mixed polymer composition.

The polymer composition of the present invention preferably comprises the polysaccharide derivative and the siloxane at a weight ratio of polysaccharide derivative: siloxane of at least 2 : 1, more preferably at least 5 : 1, most preferably at least 10 : 1, particularly at least 15 : 1; and preferably up to 100 : 1, more preferably up to 70 : 1, most preferably up to 50 : 1 and particularly up to 30 : 1.

The polysaccharide derivative is a cellulose ether, starch derivative or a guar derivative as described in more detail in European patent EP 0 504 870 B , page 3, lines 25-56 and page 4, lines 1-30. The starch derivatives are starch ethers, such as hydroxypropyl starch or carboxymethyl starch. The guar derivatives are carboxymethyl guar, hydroxypropyl guar, carboxymethyl hydroxypropyl guar or cationized guar. Preferred hydroxypropyl guars and the production thereof are described in U.S patent No. 4,645,812 , columns 4-6. Preferred polysaccharide derivatives are cellulose ethers. The cellulose ethers that are used in this invention are preferably soluble or at least swellable in water. They may contain one or more substituents of the type: hydroxyethyl, hydroxypropyl, hydroxybutyl, methyl, ethyl, propyl, dihydroxy-propyl, carboxymethyl, sulfoethyl, hydrophobic long-chain branched and unbranched alkyl radicals, hydrophobic long-chain branched and unbranched alkylaryl radicals or arylalkyl radicals, cationic radicals, acetate, propionate, butyrate, lactate, nitrate and sulfate. Examples of cellulose derivatives are hydroxyethyl cellulose (HEC), hydroxypropyl cellulose (HPC), ethylhydroxyethyl cellulose (EHEC), carboxymethylhydroxyethyl cellulose (CMHEC), hydroxypropylhydroxyethyl cellulose (HPHEC), methyl cellulose (MC), methylhydroxypropyl cellulose (MHPC), methylhydroxy-propylhydroxyethyl cellulose (MHPHEC), methylhydroxyethyl cellulose (MHEC), carboxymethyl cellulose (CMC), hydrophobically modified hydroxyethyl cellulose (hmHEC), hydrophobically modified hydroxypropyl cellulose (hmHPC), hydrophobically modified ethylhydroxyethyl cellulose (hmEHEC), hydrophobically modified carboxymethylhydroxyethyl cellulose (hmCMHEC), hydrophobically modified hydroxypropylethylhydroxyethyl cellulose (hmHPHEC), hydrophobically modified methyl cellulose (hmMC), hydrophobically modified methylhydroxy-propyl cellulose (hmMHPC), hydrophobically modified methylhydroxyethyl cellulose (hmMHEC), hydrophobically modified carboxymethylmethyl cellulose (hmCMMC), sulfoethyl cellulose (SEC), hydroxyethylsulfoethyl cellulose (HESEC), hydroxypropylsulfoethyl cellulose (HPSEC), methylhydroxyethyl-sulfoethyl cellulose (MHESEC), methylhydroxypropylsulfoethyl cellulose (MHPSEC), hydroxyethylhydroxypropylsulfoethyl cellulose (HEHPSEC), carboxymethylsulfoethyl cellulose (CMSEC), hydrophobically modified sulfoethyl cellulose (hmSEC), hydrophobically modified hydroxyethylsulfoethyl cellulose (hmHESEC), hydrophobically modified hydroxypropylsulfoethyl cellulose (hmHPSEC), and hydrophobically modified hydroxyethylhydroxypropylsulfoethyl cellulose (hmIIEIIPSEC).

Hydroxyethyl cellulose or a hydrophobically modified hydroxyethyl cellulose is particularly useful in the polymer composition and the cement composition of the present invention. Hydrophobically modified hydroxyethyl celluloses are known in the art. The hydroxyethyl cellulose can be hydrophobically modified by substituting the hydroxyethyl cellulose with one or more hydrophobic substituents, preferably with acyclic or cyclic, saturated or unsaturated, branched or linear hydrocarbon groups, such as an alkyl, alkylaryl or arylalkyl group having at least 8 carbon atoms, generally from 8 to 32 carbon atoms, preferably from 10 to 30 carbon atoms, more preferably from 12 to 24 carbon atoms, and most preferably from 12 to 18 carbon atoms. When utilizing hydroxyethyl cellulose or a hydrophobically modified hydroxyethyl cellulose in the cement slurry, solid particles in the slurry have a decreased tendency to drop out of suspension at elevated temperatures, as compared to the use of other polysaccharide derivatives.

The viscosity of the cellulose ether is generally from 1000 to 10,000 mPa˙s, preferably from 2,000 to 9,000 mPa˙s, and most preferably from 3,000 to 8,000 mPa˙s, measured as a 1.0 weight percent aqueous solution of the cellulose ether at 25°C with a Brookfield viscometer.

The siloxane is preferably a polydiorganosiloxane. The polydiorganosiloxane is generally liquid at 25°C and atmospheric pressure. The polydiorganosiloxane is preferably linear and may have the average formula 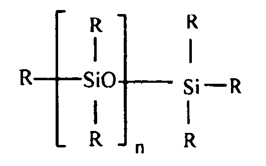 wherein each R independently is an alky or an aryl group. Examples of such substituents R are methyl, ethyl, propyl, isobutyl and phenyl and n is in the range of 20 to 2000. Such polydiorganosiloxanes are known from European Patent Application Publication EP 0 210 731. The silicon-bonded substituents in the polydiorganosiloxane are usually methyl groups, but other alkyl groups may also be present, for example alkyl groups having 2 to 6 carbon atoms. Other alkyl groups are preferably not more than 20% of the total number of substituents. The polydiorganosiloxane may be terminated, with, for example, hydroxyl groups or end-stopped with triorgano-siloxy groups such as trimethylsiloxy or dimethylvinylsiloxy groups. Preferred polydiorganosiloxanes are polydimethylsiloxanes having trimethylsilyl endblocking units and having a viscosity at 25ºC of from 5 x 10⁻⁵ m²/s to 0.1 m²/s, i.e. a value of n in the range of 40 to 1500.

More preferably a polydiorganosiloxane composition is used which is a mixture of from 85 to 99 percent, preferably 90 to 98 percent, by weight of a polydiorganosiloxane with from 1 to 15 percent, preferably 2 to 10 percent by weight of a finely-divided filler having a high (at least 50 m²/g) surface area to weight ratio, for example titanium dioxide, silicon dioxide, aluminium oxide, such as fumed aluminium oxide, or preferably silica, such as fumed or precipitated silica or silica made by the gelformation technique. Silica is preferred. The finely divided filler preferably has an average particle size of from 0.1 to 50 micrometers, more preferably from 1 to 20 micrometers. Mixtures of polydiorganosiloxanes and finely-divided fillers are described in UK Patent Application 2,279,009 and in U.S. Patent No. 4,906,478. An above-described mixture of a polydiorganosiloxane with a finely-divided filler is generally fluid at 25°C and atmospheric pressure.

Preferably the siloxane is used in the form of a siloxane on a particulate carrier. The amount of the siloxane is preferably from 5 to 50 percent, more preferably from 10 to 40 percent, and most preferably from 15 to 30 percent of the siloxane and from 95 to 50 percent, more preferably from 90 to 60 percent, and most preferably from 85 to 70 percent of the particulate carrier, based on the total weight of the siloxane and the particulate carrier.

Useful particulate carriers for the siloxane are zeolite, treated and untreated amorphous silica, silicates, such as calcium silicate, or, most preferably a maltodextrin. Maltodextrins are composed of water-soluble polymers obtained from the reaction of starch with acid and/or enzymes in the presence of water. Maltodextrin is commercially available as fine powder or in agglomerated form. Compositions of polydimethylsiloxanes and calcium silicate are described in U.S. Patent Nos. 4,906,478 and 5,073,384.

Useful commercially available siloxanes are Dow Corning® DSP Antifoam Emulsion (an emulsion comprising polydimethylsiloxane), Dow Corning® Antifoam 2210 (an emulsion consisting of polydimethoylsiloxane and polypropylene glycol), Dow Corning® 1920 Powdered Antifoam and Dow Corning® 1520 US (both are food-grade antifoaming agents that comprise 20 weight percent polydimethylsiloxane).

The polymer composition of the present invention further comprises c) an anti-foaming agent different from a siloxane. Preferably the antifoaming agent c) is in a solid form. When the active component is liquid at 25°C and atmospheric pressure, such as certain oxyalkylene antifoaming agents, the active component is preferably supported by a solid carrier, such as talc, diatomaceous earth, amorphous, colloidal, or crystalline silica, silica dioxide or a silicate, preferably calcium silicate. Instead of providing the antifoaming agent c), particularly an oxyalkylene antifoaming agent, on a separate solid carrier it can be mixed with the polysaccharide derivative, preferably the cellulose ether.

Examples of useful liquid anti-foaming agents c) are petroleum hydrocarbon oils, non-silicone acetylenic based materials; or polyoxyalkylene glycols. Examples of useful solid anti-foaming agents c) are tributyl phosphate or a metallic stearate. Well-known antifoaming agents c) are commercially available under the trademarks Agitan P-823 (a blend of liquid hydrocarbons and polyglycols on an inorganic carrier), Dee Fo 97-3 (a metallic stearate on a mineral oil carrier), Surfynol DF 110L (a nonionic, nonsilicone, acetylenic based material), Axilat 770DD (a composition consisting of polypropylene glycol, petroleum distillates, butylated hydroxytoluene and calcium silicate), Axilat 727DD (a composition consisting of silicon dioxide, colloidal silica, and an antioxidant), Axilat 775DD (a composition consisting of talc, petroleum hydrocarbon oil, silicon dioxide, and crystalline silica).

Preferably an oxyalkylene antifoaming agent, more preferably a polyoxyalkylene glycol, most preferably a polypropylene glycol is used as anti-foaming agent c). The oxyalkylene antifoaming agent is preferably represented by the following general formula R⁴ ―(-T-(- R⁵O)ₜR⁶)ₘ,
wherein R⁴ and R⁶ are the same or different and each represents a hydrogen atom or a linear or branched hydrocarbon group containing 1 to 30 carbon atoms, preferably 4 to 30, more preferably 6 to 22, most preferably 10 to 18 carbon atoms,
the t R⁵O groups are the same or different and each represents an oxyalkylene group containing 2 to 18 carbon atoms, preferably 2 to 8, more preferably 2 to 4 carbon atoms, t represents the average molar number of addition of the oxyalkylene group(s) and is a number of 1 to 300,
T represents --CO₂--, --SO₄--, --PO₄--, --NH--, or preferably --O--;
m represents an integer of 1 or 2 and, when R₄ is a hydrogen atom, m is 1. Further, the moiety (R⁵O)ₜ is preferably composed of one or more oxyethylene groups and/or one or more oxypropylene groups. Preferably m is 1.

Surprisingly, a synergistic effect has been found when using b) a siloxane and c) an antifoaming agent different from a siloxane in combination. Foam built in the cement slurry dissipates considerably faster when b) a siloxane and c) an anti-foaming agent different from a siloxane, preferably an oxyalkylene antifoaming agent, are used in combination than when they are used individually at corresponding amounts.

The weight ratio between b) the siloxane and c) the antifoaming agent different from a siloxane preferably is from 1 : 10 to 10 : 1, more preferably from 3 : 1 to 1 : 3, most preferably from 1.5 : 1 to 1 : 1.5. The weight ratios relate to the siloxane b) and the active component(s) of the antifoaming agent c) excluding any carriers or diluents.

The weight ratio between a) the polysaccharide derivative and c) the antifoaming agent different from a siloxane is preferably at least 2 : 1, more preferably at least 5 : 1, most preferably at least 10 : 1, particularly at least 15 : 1; and preferably up to 100 : 1, more preferably up to 70 : 1, most preferably up to 50 : 1 and particularly up to 30 : 1. The weight ratios relate to the active component(s) of the antifoaming agent c) excluding any carriers or diluents.

The polymer composition of the present invention optionally comprises d) a stabilizer. When the polymer composition is incorporated in a cement slurry the stabilizer is used to prevent the cement from prematurely setting during transport or otherwise before the slurry is mixed into the substrate soil. Various materials that can be used as a stabilizer include but are not limited to sucrose, lignosulfonates, carboxylic acids, polycarboxylic acids, whey protein, carbohydrates, oxides of lead and zinc, phosphates, magnesium salts, flourates, and borates. Hydroxyethyl celluloses and hydrophobically modified hydroxyethyl celluloses also have a stabilizing effect in the cement slurry.

If the polymer composition of the present invention comprises a stabilizer d), the weight ratio between the polysaccharide derivative a) and the stabilizer d) preferably is from 1 : 10 to 10 : 1, more preferably from 3 : 1 to 1 : 3, most preferably from 1.5 : 1 to 1 : 1.5. If the polymer composition of the present invention comprises a stabilizer d), the weight ratio of the stabilizer d) : siloxane b) is preferably at least 2 : 1, more preferably at least 5 : 1, most preferably at least 10 : 1, particularly at least 15 : 1; and preferably up to 100 : 1, more preferably up to 70 : 1, most preferably up to 50 : 1 and particularly up to 30 : 1.

The polymer composition of the present invention preferably comprises
a) from 20 to 95, more preferably from 30 to 90, most preferably from 40 to 80 weight percent of the polysaccharide derivative,
b) from 1 to 20, more preferably from 2 to 15, most preferably from 3 to 10 weight percent of the siloxane,
c) from 1 to 20, more preferably from 2 to 15, most preferably from 3 to 10 weight percent of the antifoaming agent different from a siloxane,
d) from 0 to 75, more preferably from 10 to 70, most preferably from 12 to 60 weight percent of the stabilizer,the remainder being a particulate carrier for the siloxane, if any, a carrier for the antifoaming agent c), if any, and optional components.

The rheology of a cement slurry may be modified by incorporating a) a polysaccharide derivative, b) a siloxane, c) an anti-foaming agent different from a siloxane and optionally d) a stabilizer described above into a slurry of cement in water.

The polysaccharide derivative a), the siloxane b), the antifoaming agent c), and the optional stabilizer d) can be added individually to the cement or two or more of the components a) to d) can be pre-mixed before adding them to the cement. Some or all of the components a) to d) can be added to the cement during or after, but preferably before the addition of water to the cement.

The cement composition of the present invention preferably comprises a) from 0.001 to 5.0 percent, more preferably 0.01 to 2 percent, most preferably 0.03 to 0.3 percent of a polysaccharide derivative, b) from 0.00005 to 0.5 percent, more preferably 0.0001 to 0.05 percent, most preferably 0.0002 to 0.01 percent of a siloxane, c) from 0.00005 to 0.5 percent, more preferably 0.0001 to 0.05 percent, most preferably 0.0002 to 0.01 percent of a anti-foaming agent different from a siloxane (calculated based on the weight of the active ingredient of the anti-foaming agent excluding any carrier or diluent), and d) from 0 to 5.0 percent, more preferably 0.0002 to 0.5 percent, most preferably 0.005 to 0.1 percent, particularly 0.001 to 0.02 percent of a stabilizer, based on the weight of the cement. A variety of hydraulic cements can be utilized in accordance with the present invention including those comprised of calcium, aluminum, silicon, oxygen and/or sulfur which set and harden by reaction with water. Such hydraulic cements include, but arc not limited to, Portland cements, pozzolanic cements, gypsum cements, aluminous cements, silica cements and alkaline cements. Portland cements are generally preferred for use in accordance with the present invention.

Further, the cement composition of the present invention optionally comprises fillers, such as calcium carbonate, fly ash, blast furnace slag, fumed silica, bentonite, clay, natural minerals based on hydrous aluminum silicate, for example kaolinite or halocite. These powders can be used alone or in combination thereof. Further, sand, ballast and mixtures thereof may be added if necessary as aggregate to these powders.

The water utilized in the cement compositions of this invention can be fresh water, unsaturated salt solutions including brines and seawater and saturated salt solutions. Generally, the water can be from any source provided it does not contain an excess of compounds that adversely affect other components in the cement compositions. However, the cement composition preferably comprises no or not more than 5 percent of sodium chloride, based on the weight of water. The water is present in the cement compositions of this invention in an amount sufficient to form a pumpable slurry. More particularly, the water is present in the cement compositions in an amount in the range of from 0.3 to 2 weight parts of water, preferably 0.5 to 1 weight parts of water, per weight part of cement.

The cement slurry can be used in a method of forming a cement stabilized substrate which comprises the steps of adding to the substrate a cement slurry produced by mixing a polysaccharide, a siloxane, an anti-foaming agent different from a siloxane with cement, water and one or more optional additives, mixing the cement slurry into the substrate, and grading and compacting the mixture of substrate and cement slurry.

The substrate can be soil, aggregate, asphalt, reclaimed asphalt, and mixtures thereof. Aggregates include ballast from river, land, mountain or sea, lime ballast, rubble thereof, blast furnace slug coarse or fine aggregate, ferronickel slug coarse aggregate, artificial and natural light-weight coarse aggregate, and regenerated aggregate.

The present invention is further illustrated by the following examples which are not to be construed to limit the scope of the present invention. Unless otherwise indicated, all percentages and parts are by weight.

### Examples 1 - 16 and Comparative Examples A - P

The following components are used in the examples: HEC-1: CELLOSIZE™ QP 100 MH-V (Trademark of The Dow Chemical Company) hydroxethyl cellulose (IIEC). The viscosity of a 1% aqueous solution is 4400 mPa˙s, measured using Brookfield LVT, spindle SC4-25, 30 rpm at 25°C.

HEC-2: CELLOSIZE QP 100 MH hydroxyethyl cellulose. The viscosity of a 1% aqueous solution is 4520 mPa˙s, measured according to IB-44C-0.1 (ASTM D-2364).

HEC-3: CELLOSIZE HEC 10 HV hydroxyethyl cellulose. The viscosity of a 1% aqueous solution is 5260 mPa˙s, measured Brookfield LVT spindle SC4-25, 30 rpm at 25ºC.

DC 1920: Siloxane on Particulate Carrier, commercially available as Dow Corning 1920 Powdered Antifoam (trademark of Dow Corning Corporation). It contains more than 60 wt. % maltodextrin (CAS # 9050-36-6) and 1.0-5.0 wt. % methylated silica (CAS # 67762-90-7). It is a free-flowing powder silicone antifoaming agent that comprises 20% of polydimethylsiloxane. The density at 25°C is 0.6-1.3 g/cc.

DC 1520: Dow Corning 1520 US manufactured by Dow Corning Corporation. A food-grade liquid silicone emulsion antifoaming agent that comprises 20% of polydimethylsiloxane.

AF-1: polypropylene glycol.

AF-2: a dry powder anti-foaming agent commercially available under the trademark Axilat 770 DD from Hexion Specialty Chemicals, Incorporated. The bulk density is 22 1b/ft³ (352 kg/m³). It contains about 20 % polypropylene glycol (CAS # 25322-69-4), about 13 % petroleum distillates (CAS # 64741-96-4) and 1-5% butylated hydroxytoluene. The remaining amount is calcium silicate (CAS # 1344-95-2).

Sucrose: extra fine granulated sucrose is used which has a melting point of 185 C, a solubility in water of 200 gm/100gm at 20°C, a bulk density of 49-56 lbs/cubic foot (784 - 896 kg/m³) and 0.05 weight percent moisture.

### Foam Dissipation Test:

A solution of 0.34 parts of cellulose ether (CE) and 0.34 parts of sucrose in 199.32 parts of water is prepared. Once hydrated, the solution is added into a mixing bowl. The amounts of anti-foaming agent, i.e. component b) and/or component c) as listed in Table 1 below are added to the mixing bowl. The solution and the anti-foaming agent are mixed for 5 minutes with a kitchen mixer at a speed as high as possible such that the solution still stays in the bowl. When mixing is stopped, the time how long it takes for the foam to completely dissipate is recorded.

### Determining Slump trough a Funnel and Slump size

A cement slurry is prepared by mixing the following components in a Kitchen Aid Mixer:
a) 0.34 parts of a hydroxyethyl cellulose (HEC) as listed in Table 1 below,
b) varying amounts of a siloxane as listed in Table 1 below; component b) acts as an antifoaming agent;
c) varying amounts of an antifoaming agent as listed in Table 1 below,
d) 0.34 parts of sucrose,
e) 199.32 parts of water, and
f) 316 parts of cement.

The slurry is mixed for 5 minutes and slaked for 5 minutes. The slurry is then poured to the fill line of a funnel having a diameter of 10 cm connected to a ring stand. The distance from the funnel to Mylar film is 13 cm. The time for the slurry to empty the funnel is recorded as "slump time through funnel" and the diameter of the slump is measured.

The results of the foam dissipation test, the slump time through funnel and the diameter of the slump are listed in Table 1 below. The Examples illustrate the fast foam dissipation when a siloxane b) and an anti-foaming agent c) different from a siloxane are used in combination in a polymer composition comprising a polysaccharide. The synergistic effect on foam dissipation when using a siloxane b) and an anti-foaming agent c) in combination is illustrated when comparing Examples 1 and 2 with Comparative Example B; Example 5 with Comparative Examples B and C; Example 6 with Comparative Examples H and I; Example 7 with Comparative Examples E and F; Examples 8 and 9 with Comparative Examples K and L; and when comparing Examples 10 and 11 with Comparative Examples M and N. Examples 13 - 16 illustrate that some foam dissipating effect is even achieved at very small amounts of siloxane b) and anti-foaming agent c).

The slump times through the funnel and the diameter of the slump listed in Table 1 below illustrate that the use of the siloxane b) and the anti-foaming agent c) in combination docs not negatively impact the rheology or flow of the slurry. Specifically, the use of the siloxane b) and the anti-foaming agent c) does not make the slurry very runny, which would result in very short slump times through the funnel and very large slump sizes. Specifically, the comparison between Comparative Example D (no antifoaming agent) on one hand and Examples 6 and 7 on the other hand illustrates that the slump times through the funnel and the diameter of the slump are comparable and that the use of the siloxane b) and the anti-foaming agent c) in combination does not negatively impact the rheology or flow of the slurry, but that the foam dissipates must faster when using the siloxane b) and the anti-foaming agent c). A very runny slurry would be undesirable when applying the slurry to a road bed since the slurry would have the potential of running off the road grade into the ditches.

**Table 1**

| **(Comparative) Example** | **HEC type** | **Parts DC 1920** | **Parts DC 1520** | **Type antifoaming agent c)** | **Parts antifoaming agent c)** | **Foam dissipation** | **Slump time through funnel (sec.)** | **Slump size (cm)** |
|---|---|---|---|---|---|---|---|---|
| Comp. A | HEC-1 | -- | -- | AF-1 | Trace amounts | 10 minutes | 10.8 | 21.4 |
| 1 | HEC-1 | 0.0559 | -- | AF-1 | Trace amounts | 29 seconds | 11.0 | 21.0 |
| 2 | HEC-1 | -- | 0.0559 | AF-1 | Trace amounts | 26 seconds | 11.1 | 21.0 |
| 3 | HEC-1 | 0.0279 | -- | AF-1 | Trace amounts | 52 seconds | | |
| 4 | HEC-1 | 0.0144 | -- | AF-1 | Trace amounts | 75 seconds | | |
| 5* | HEC-1 | 0.0026 | -- | Trace amounts of AF-1 + 0.0013 parts of AF-2 | | 108 seconds | 10.7 | 20.9 |
| Comp. B | HEC-1 | -- | -- | Trace amounts of AF-1 + 0.0565 parts of AF-2 | | 265 seconds | | |
| Comp. C | HEC-1 | -- | -- | Trace amounts of AF-1 + 0.1142 parts of AF-2 | | 170 seconds | | |
| Comp. D | HEC-2 | -- | -- | -- | -- | 35 minutes | 13.3 | 21 |
| Comp.E E | HEC-2 | 0.114 | -- | -- | -- | 65 seconds | | |
| Comp. F | HEC-2 | -- | -- | AF-2 | 0.114 | 88 seconds | 11.1 | 23.4 |
| Comp. G | HEC-2 | 0.227 | -- | -- | -- | 55 seconds | 13.0 | 21.1 |
| Comp. H | HEC-2 | 0.057 | -- | -- | -- | 170 seconds | | |
| Comp. I | HEC.2 | -- | -- | AF-2 | 0.057 | 183 seconds | | |
| 6 | HEC-2 | 0.037 | -- | AF-2 | 0.015 | 22 seconds | 9.8 | 22.0 |
| 7 | HEC-2 | 0.073 | -- | AF-2 | 0.030 | 16 seconds | 10.8 | 22.6 |
| Comp.J | HEC-3 | -- | -- | -- | -- | > 55 minutes | 17.0 | 18.4 |
| Comp.K | HEC-3 | 0.057 | -- | -- | -- | 145 seconds | | |
| Comp.L | HEC-3 | -- | -- | AF-2 | 0.057 | 180 seconds | | |
| Comp.M | HEC-3 | 0.114 | -- | -- | -- | 95 seconds | | |
| Comp.N | HEC-3 | -- | -- | AF-2 | 0.114 | 130 seconds | 11.5 | 20.6 |
| Comp.0 | HEC-3 | 0.227 | -- | -- | -- | 92 seconds | 14.1 | 20.9 |
| Comp.P | HEC-3 | -- | -- | AF-2 | 0.227 | 114 seconds | 10.4 | 22.8 |
| 8 | HEC-3 | 0.038 | -- | AF-2 | 0.015 | 23 seconds | | |
| 9 | HEC-3 | -- | 0.029 | AF-2 | 0.011 | 34 seconds | 10.9 | 21.7 |
| 10 | HEC-3 | 0.074 | -- | AF-2 | 0.029 | 20 seconds | 10.7 | 21.7 |
| 11 | HEC-3 | -- | 0.074 | AF-2 | 0.029 | 21 seconds | 6.4 | 21.8 |
| 12 | HEC-3 | 0.012 | -- | AF-2 | 0.005 | 39 seconds | 15.9 | 20.5 |
| 13 | HEC-3 | -- | 0.0017 | AF-2 | 0.005 | 180 seconds | | |
| 14 | HEC-3 | 0.0017 | -- | AF-2 | 0.005 | 130 seconds | | |
| 15 | HEC-3 | 0.0024 | -- | AF-2 | 0.0010 | 280 seconds | 18.7 | 19.5 |
| 16* | HEC-3 | -- | 0.0026 | AF-2 | 0.0014 | 180 seconds | 12.0 | 22.4 |

| | | | | | | | | |
|---|---|---|---|---|---|---|---|---|
| *Contains raw sugar instead of extra fine granulated sucrose | | | | | | | | |

## Claims

1. A composition comprising a) a polysaccharide derivative that is a cellulose ether, starch ether, carboxymethyl guar, hydroxypropyl guar, carboxymethyl hydroxypropyl guar or cationized guar, b) a siloxane and c) an anti-foaming agent different from a siloxane.

2. The composition of claim 1 wherein the polysaccharide derivative is a cellulose ether.

3. The composition of claim 2 wherein the cellulose ether is a hydroxyethyl cellulose or a hydrophobically modified hydroxyethyl cellulose.

4. The composition as claimed in any one of the preceding claims, wherein the weight ratio between the polysaccharide and the siloxane is 1:1 to 100:1 and/or wherein the weight ratio between the siloxane and the antifoaming agent c) is from 1:10 to 10:1.

5. The composition as claimed in any one of the preceding claims, wherein the siloxane is a polydimethylsiloxane and/or the antifoaming agent c) is an oxyalkylene.

6. The composition as claimed in any one of the preceding claims wherein the siloxane is supported by a particulate carrier.

7. The composition of any one of claims 1-6, wherein the composition comprises
a) from 20 to 95 wt.% of a polysaccharide derivative,
b) from 1 to 20 wt.% of a siloxane,
c) from 1 to 20 wt.% of an antifoaming agent different from a siloxane, and
d) from 0 to 75 weight percent of a stabilizer,
the remainder being a particulate carrier for the siloxane, if any, and a carrier for the antifoaming agent c), if any, and optional components.

8. The composition of any one of claims 1 to 6, wherein the composition further comprises cement.

9. The composition as claimed in claim 8, wherein the composition comprises a) from 0.001 to 5.0 % of a polysaccharide derivative, b) from 0.00005 to 0.5 % of a siloxane, c) from 0.00005 to 0.5 percent of an anti-foaming agent different from a siloxane, and d) from 0 to 5.0 percent of a stabilizer, based on the weight of the cement.

10. The composition as claimed in claim 8 or claim 9, wherein the composition additionally comprises from 0.3 to 2 wt parts water per wt part of cement and optionally up to 5 percent of sodium chloride, based on the weight of water.

11. A method of forming a cement stabilized substrate comprising the steps of adding to the substrate a cement slurry produced by mixing a polysaccharide derivative, a siloxane, an anti-foaming agent different from a siloxane with cement, water and one or more optional additives, mixing the cement slurry into the substrate, and grading and compacting the mixture of substrate and cement slurry.

12. The method of claim 11 wherein the substrate is selected from the group consisting of soil, aggregate, asphalt, reclaimed asphalt, and mixtures thereof.

13. Use of the composition of any one of claims 1-7 for modifying the rheology of a cement slurry.

14. Use of a composition as claimed in any one of claims 8-10 for stabilizing a substrate.

15. Use as claimed in claim 14, wherein the substrate is selected from the group consisting of soil, aggregate, asphalt, reclaimed asphalt, and mixtures thereof.

## Patentansprüche

1. Eine Zusammensetzung, beinhaltend a) ein Polysaccharid-Derivat, das ein Celluloseether, Stärkeether, Carboxymethylguargummi, Hydroxypropylguargummi, Carboxymethyl-Hydroxypropylguargummi oder kationisierter Guargummi ist, b) ein Siloxan und c) ein Antischaummittel, das sich von einem Siloxan unterscheidet.

2. Zusammensetzung gemäß Anspruch 1, wobei das Polysaccharid-Derivat ein Celluloseether ist.

3. Zusammensetzung gemäß Anspruch 2, wobei der Celluloseether eine Hydroxyethylcellulose oder eine hydrophob modifizierte Hydroxyethylcellulose ist.

4. Zusammensetzung gemäß einem der vorhergehenden Ansprüche, wobei das Gewichtsverhältnis zwischen dem Polysaccharid und dem Siloxan 1:1 bis 100:1 ist und/oder wobei das Gewichtsverhältnis zwischen dem Siloxan und dem Antischaummittel c) von 1:10 bis 10:1 1 ist.

5. Zusammensetzung gemäß einem der vorhergehenden Ansprüche, wobei das Siloxan ein Polydimethylsiloxan ist und/oder das Antischaummittel c) ein Oxyalkylen ist.

6. Zusammensetzung gemäß einem der vorhergehenden Ansprüche, wobei das Siloxan durch einen partikulären Träger gestützt wird.

7. Zusammensetzung gemäß einem der Ansprüche 1-6, wobei die Zusammensetzung Folgendes beinhaltet:
a) von 20 bis 95 Gew.-% eines Polysaccharid-Derivates,
b) von 1 bis 20 Gew.-% eines Siloxans,
c) von 1 bis 20 Gew.-% eines Antischaummittels, das sich von einem Siloxan unterscheidet, und
d) von 0 bis 75 Gewichtsprozent eines Stabilisators,
wobei der Rest ein partikulärer Träger für das Siloxan, falls vorhanden, und ein Träger für das Antischaummittel c), falls vorhanden, und optionale Komponenten ist.

8. Zusammensetzung gemäß einem der Ansprüche 1-6, wobei die Zusammensetzung ferner Zement beinhaltet.

9. Zusammensetzung gemäß Anspruch 8, wobei die Zusammensetzung a) von 0,001 bis 5,0 % eines Polysaccharid-Derivates, b) von 0,00005 bis 0,5 % eines Siloxans, c) von 0,00005 bis 0,5 Prozent eines Antischaummittels, das sich von einem Siloxan unterscheidet, und d) von 0 bis 5,0 Prozent eines Stabilisators, bezogen auf das Gewicht des Zements, beinhaltet.

10. Zusammensetzung gemäß Anspruch 8 oder Anspruch 9, wobei die Zusammensetzung zusätzlich von 0,3 bis 2 Gew.-Teile Wasser pro Gew.-Teil Zement und optional bis zu 5 Prozent Natriumchlorid, bezogen auf das Gewicht des Wassers, beinhaltet.

11. Ein Verfahren zur Bildung eines zementstabilisierten Substrats, beinhaltend die Schritte des Zugebens zu dem Substrat von Zementschlamm, der durch Mischen eines Polysaccharid-Derivates, eines Siloxans, eines Antischaummittels, das sich von einem Siloxan unterscheidet, mit Zement, Wasser und einem oder mehreren optionalen Zusatzstoffen hergestellt wird, des Mischens des Zementschlamms in das Substrat und des Siebens und Verdichtens der Mischung aus Substrat und Zementschlamm beinhaltet.

12. Verfahren gemäß Anspruch 11, wobei das Substrat ausgewählt ist aus der Gruppe, bestehend aus Erdreich, Aggregat, Asphalt, reycliertem Asphalt und Mischungen davon.

13. Eine Verwendung der Zusammensetzung in einem der Ansprüche 1-7 zur Modifizierung der Rheologie eines Zementschlamms.

14. Verwendung einer Zusammensetzung gemäß einem der Ansprüche 8-10 zur Stabilisierung eines Substrats.

15. Verwendung gemäß Anspruch 14, wobei das Substrat ausgewählt ist aus der Gruppe, bestehend aus Erdreich, Aggregat, Asphalt, recycliertem Asphalt und Mischungen davon.

## Revendications

1. Une composition comprenant a) un dérivé de polysaccharide qui est un éther de cellulose, un éther d'amidon, un guar carboxyméthylé, un guar hydroxypropylé, un guar carboxyméthyl hydroxypropylé ou un guar cationisé, b) un siloxane et c) un agent antimoussant différent d'un siloxane.

2. La composition de la revendication 1 dans laquelle le dérivé de polysaccharide est un éther de cellulose.

3. La composition de la revendication 2 dans laquelle l'éther de cellulose est une hydroxyéthyl cellulose ou une hydroxyéthyl cellulose modifiée hydrophobiquement.

4. La composition telle que revendiquée dans une quelconque des revendications précédentes, dans laquelle le rapport pondéral entre le polysaccharide et le siloxane va de 1/1 à 100/1 et/ou dans laquelle le rapport pondéral entre le siloxane et l'agent antimoussant c) va de 1/10 à 10/1.

5. La composition telle que revendiquée dans une quelconque des revendications précédentes, dans laquelle le siloxane est un polydiméthylsiloxane et/ou l'agent antimoussant c) est un oxyalkylène.

6. La composition telle que revendiquée dans une quelconque des revendications précédentes dans laquelle le siloxane est supporté par un véhicule particulaire.

7. La composition d'une quelconque des revendications 1 à 6, la composition comprenant
a) de 20 à 95 % en poids d'un dérivé de polysaccharide,
b) de 1 à 20 % en poids d'un siloxane,
c) de 1 à 20 % en poids d'un agent antimoussant différent d'un siloxane, et
d) de 0 à 75 pour cent en poids d'un stabilisant,
le reste étant un véhicule particulaire pour le siloxane, s'il y en a, et un véhicule pour l'agent antimoussant c), s'il y en a, et des composants facultatifs.

8. La composition d'une quelconque des revendications 1 à 6, la composition comprenant en outre du ciment.

9. La composition telle que revendiquée dans la revendication 8, la composition comprenant a) de 0,001 à 5,0 % d'un dérivé de polysaccharide, b) de 0,00005 à 0,5 % d'un siloxane, c) de 0,00005 à 0,5 pour cent d'un agent antimoussant différent d'un siloxane, et d) de 0 à 5,0 pour cent d'un stabilisant, rapporté au poids du ciment.

10. La composition telle que revendiquée dans la revendication 8 ou la revendication 9, la composition comprenant additionnellement de 0,3 à 2 parties en poids d'eau par partie en poids de ciment et facultativement jusqu'à 5 pour cent de chlorure de sodium, rapporté au poids d'eau.

11. Une méthode pour former un substrat stabilisé par du ciment comprenant les étapes consistant à ajouter au substrat un coulis de ciment produit en mélangeant un dérivé de polysaccharide, un siloxane, un agent antimoussant différent d'un siloxane avec du ciment, de l'eau et un ou plusieurs additifs facultatifs, mélanger le coulis de ciment dans le substrat, et cribler et compacter le mélange de substrat et de coulis de ciment.

12. La méthode de la revendication 11 dans laquelle le substrat est sélectionné dans le groupe consistant en sol, agrégat, asphalte, asphalte recyclé, et des mélanges de ceux-ci.

13. Utilisation de la composition dans une quelconque des revendications 1 à 7 pour modifier la rhéologie d'un coulis de ciment.

14. Utilisation d'une composition telle que revendiquée dans une quelconque des revendications 8 à 10 pour stabiliser un substrat.

15. Utilisation telle que revendiquée dans la revendication 14, dans laquelle le substrat est sélectionné dans le groupe consistant en sol, agrégat, asphalte, asphalte recyclé, et des mélanges de ceux-ci.
